# EUROPEAN PATENT SPECIFICATION

(11) **EP 2 936 250 B1**
(45) Date of publication and mention of the grant of the patent: **25.03.2020**
(21) Application number: 13805390.5
(22) Date of filing: 16.12.2013
(51) Int. Cl.: G03G 15/00

(54) **LEFT OVER MEDIA IDENTIFICATION**
IDENTIFIZIERUNG ÜBRIGGELASSENER MEDIEN
IDENTIFICATION DE SUBSTRAT RESTANT

(30) Priority: 21.12.2012 EP 12198818
(43) Date of publication of application: 28.10.2015
(73) Proprietor: Canon Production Printing Netherlands B.V., 5914 CA Venlo (NL)
(72) Inventor: THIJSSEN, Abraham, NL-5821 BN Vierlingsbeek (NL); STOK, Estella, NL-5616 BJ Eindhoven (NL); DE JONG, Jacob J.D., NL-5913 AX Venlo (NL)
(74) Representative: Canon Production Printing IP Department
(86) International application number: PCT/EP2013/076662
(87) International publication number: WO 2014/095693

(56) References cited:
- US-A1- 2007 166 056
- US-A1- 2010 032 886
- US-A1- 2010 052 243

## Description

The invention relates to a method for assigning an identification to at least one sheet to be removed from an input holder of an image reproduction apparatus.

The at least one sheet as mentioned here-above may be one sheet or a plurality of sheets forming a pile of sheets. An image reproduction apparatus like a printer or a copier has at least one input holder and at least one output holder. The input holder is used for putting media in it to be printed upon. Such an input holder will hereinafter also called a holder. The output holder is used for collecting sheets after an image or a document has been printed upon the sheets. Media material is used when a print job has to be printed or a copy job has to be processed by the image reproduction apparatus. A print job or a copy job will be further referred to as a print job. When a plurality of print jobs are to be processed on the same image reproduction apparatus, it may happen that a media required for a print job which is at hand, is not present in any of the input holders of the image reproduction apparatus. In that case another media is present in an input holder and the operator has to remove the latter media from the input holder. The operator puts the media removed from the input holder on a table or at any other location where the operator usually puts leftovers of media in order to establish an empty input holder which is ready for receiving the desired media sheets. The media that is put aside on such a location may often be almost indistinguishable from other media types on that location in terms of visual appearance. The media types have for example a same size, a same colour, but differ in grain direction, weight etc. In this case it is hard to recognize the media at first sight, if there are multiple media stacks on the same table or location.

Patent application US 2010/0032886 describes a composite feeding mechanism using a stack of input holders. The input holders can hold a receiving medium to satisfy print jobs. Receiving medium can be removed from an input holder located at the top of the stack in order to satisfy a job requirement.

It is an objective of the invention to improve the identification of the at least one sheet removed from an input holder of an image reproduction apparatus.

According to the invention, this object is achieved by the method according to the preamble of claim 1, wherein the method comprises the steps of detecting a trigger of removal of the at least one sheet from the input holder, and upon detection of the trigger, retrieving characteristics of the at least one sheet and printing an identification sheet comprising the retrieved characteristics.

The trigger of removal of the at least one sheet may be detected by sensors in the input holder or via a signal from a user interface screen of the image reproduction apparatus. The trigger may also be detected when the user of the image reproduction apparatus uses the user interface screen to define a new media type to be placed in the input holder or in another input holder in case the image reproduction apparatus comprises a plurality of input holders.

The characteristics of the at least one sheet are stored in memory of the image reproduction apparatus by means of a loaded digital media catalogue or when the at least one sheet has been loaded to the image reproduction apparatus. The characteristics of the at least one sheet are retrieved from memory when the trigger to unload the at least one sheet is detected.

Sheets which are removed from the input holder are kept at a specific location in order to be able to reuse the leftover of the media for print jobs in the future or transport it to a stock of media. The identification sheet may be printed before the removal of the at least one sheets or after the removal of the at least one sheet. When printing the identification sheet after removal of the at least one sheet from the input holder, the identification sheet may be printed on a sheet present in another input holder in case of an image reproduction apparatus comprising at least two original sheet input holders, or may be printed on a sheet from a new pile of sheets which has been put in the input holder from which the at least one sheet is just removed. The printed identification sheet comprises the characteristics of the at least one sheet which will be removed or has been removed from the input holder. The printed identification sheet may be put near or on top of, the at least one sheet after removal of the at least one sheet from the input holder.
The identification sheet eases the identification of the at least one sheet at a later moment in time after removal from the input holder.

According to an embodiment of the method the characteristics of the at least one sheet comprises at least one of the amount of the at least one sheet, the kind of media of the at least one sheet, name of the operator in charge of removal, stock data, and metadata of the last job printed from the input holder. The metadata will reflect metadata of the last job printed on media from the input holder.

The amount of sheets to be unloaded may be determined in a number of known ways by the image reproduction apparatus and will not be elaborated upon. The amount of sheets may also be estimated by the image reproduction apparatus by means of the weight of the amount of sheets.

The kind of media may comprise media parameters earlier put in via a user interface at the image reproduction apparatus when the at least one sheet had been put in the input holder or when a digital media catalogue is loaded into the image reproduction apparatus. A media parameter may be an identifying media type name, a brand, a size, a color, a weight, a quality, a grain direction etc.

Metadata of the last job printed on media from the input holder may be a job name, document name, client name, user name, printer name, date-time stamp of print job, number of prints, finishing options, double-sided or single-sided, removal time of the at least one sheet, time of receiving the trigger to removal, name of the operator, etc. The metadata may help a user to decide which leftover he will use for a print job later in time.

Optionally a barcode may be printed on the identification sheet for easy feedback of a management information system (MIS) in order to achieve an easy media stock management. The barcode may also be used when assigning or adding the right media when to be loaded again. The date of the first use of the media and the first store date of the media may also be established.

According to an embodiment the identification sheet is printed automatically upon detection of a trigger of a removal of the at least one sheet. The automatic printing of the identification sheet may be implemented as a job setting of a print job. The job setting may set automatically printing of the identification sheet after the respective print job. The automatic printing of the identification sheet may be implemented as a system setting of the image reproduction apparatus. The system setting may set automatically printing of the identification sheet after every job or when receiving the trigger like opening of a respective holder.

According to an embodiment the identification sheet is printed on request. The request option may be implemented as an explicit analogue or digital operable element, like a button on the image reproduction apparatus, to print the identification sheet. The operable element may be part of the user interface of the image reproduction apparatus, which user interface may be a control panel, a console, a user interface screen, a tablet or a smart phone, wireless or wired connected to the image reproduction apparatus. The operable element may be part of the input holder, a local user interface of the input holder, or a local user interface of the paper input module of the image reproduction apparatus, which module comprises the respective input holder. The latter operable element may accomplish printing of the identification sheet and consecutively opening of the respective input holder. The operable element may also be part of a finisher module of the image reproduction apparatus. In the latter case the operable element is positioned near the location of the image reproduction apparatus where the identification sheet is delivered. The identification sheet is then collected from the output holder to be put on a location such as a media collect table near the at least one sheet which is removed from the input holder.

According to a further embodiment the method comprises the further steps of displaying a user input window at a user interface screen of the reproduction apparatus upon detection of the trigger of the removal, requesting via the user input window an approval or a disapproval of the printing of the identification sheet, receiving the approval or the disapproval via the user input window, and printing the identification sheet only in case of a received approval.

The printing of the identification sheet on request may be implemented via interaction by means of the user interface screen of the image reproduction apparatus upon opening of the input holder. A question for the operator may be displayed at the user interface screen if an identification sheet needs to be printed.

According to an embodiment the method comprises the step of locking the input holder from removing the at least one sheet until the identification sheet is printed. The locking may take place after a received approval or may take place automatically when the trigger for removal, e.g. trying to open the input holder, is detected. This is advantageous since by doing so the user is obliged to approve the printing of the identification sheet. The identification sheet may be printed, besides from another input holder, also from the input holder from which the at least one sheet is to be removed.

According to a further embodiment the identification sheet is only printed on request, for example after a confirmation of the trigger for removal is received and/or an approval to print an identification sheet is received.

According to another further embodiment the identification sheet is mandatorily printed, for example in order to commit to a service level agreement used for the image reproduction apparatus and its users.

According to an embodiment the identification sheet is printed from the input holder at which a trigger of removal of the least one sheet is detected. In this case the identification sheet is printed on media from the input holder before the actual removal of the media from the input holder has taken place. This method is in particular suitable for an image reproduction apparatus which has only one input holder for the media.

According to an embodiment the identification sheet is printed from another input holder than the input holder at which a trigger of removal of the least one sheet is detected. This method is in particular suitable for an image reproduction apparatus which has more than one input holder for the media. By printing from another input holder the user has the opportunity to use media from the other input holder which deviates from the media to be removed. The identification sheet is then printed on deviating media and jumps out in comparison with the at least one sheet.

According to an embodiment the identification sheet is printed to a same output holder as to which the image reproduction apparatus is currently printing a print job or to which the image reproduction apparatus has printed his last print job. This method is in particular suitable for an image reproduction apparatus which has only one output holder.

According to an embodiment the identification sheet is printed to another output holder than an output holder to which the image reproduction apparatus is currently printing a print job or to which the image reproduction apparatus has printed his last print job. This method is in particular suitable for an image reproduction apparatus which has more than one output holder. In this way the printing of the document of the print job is not noticeably delayed. The printing of the document and the identification sheet are presented as a simultaneous action. This is in particular handy when a large print job is being processed and the trigger for removal of sheets from the input holder is detected. The first output holder may be a non-standard output holder, for example an error output holder.

According to an embodiment the identification sheet is printed as a duplex sheet. By printing the identification data on the front side of the identification sheet as well as on the back side of the identification sheet, the identification data will always be visible whatsoever side is put upside on top of the pile of removed sheets.

According to an embodiment the identification data which is most important for the user is printed in a margin of the identification sheet. This is advantageous, since the most important data is still visible when more piles of media are stacked and the identification sheets are shifted a margin width out of the stack.

The invention also relates to an image reproduction apparatus for printing a digital image on a receiving medium, the image reproduction apparatus comprising a print unit, an input holder for holding sheets of the receieving medium, a user interface unit and a control unit for controlling the print unit and the user interface unit, said control unit comprising detection means for detecting a trigger of removal of at least one sheet from the input holder, retrieving means for retrieving characteristics of the at least one sheet upon detection of the trigger, wherein the print unit is configured to print an identification sheet comprising the retrieved characteristics.

According to an embodiment of the image reproduction apparatus according to the invention the control unit comprises requesting means for requesting via a user input window at the user interface unit an approval or disapproval of the printing of the identification sheet upon detection of the trigger and a receiving means for receiving an approval or a disapproval via the user interface window, wherein the control unit is configured to print the identification sheet only in case of a receipt of an approval by the receiving means.

An example related to the invention is a method for assigning an identification to at least one consumable to be removed from an image reproduction apparatus, the method comprising the steps of detecting a trigger of removal of the at least one consumable from the image reproduction apparatus, and upon detection of the trigger, retrieving characteristics of the at least one consumable and printing an identification sheet comprising the retrieved characteristics.

According to the example, the characteristics of the at least one sheet comprises at least one of the amount of the at least one consumable, a remaining amount of content of the at least consumable, if applicable, the kind of the at least consumable, stock data, data of counters of the image reproduction apparatus, and lifetime data of the at least one consumable.

According to the example, the method comprises the further steps of displaying a user input window at a user interface screen of the reproduction apparatus upon detection of the trigger of the removal of the at least one consumable, requesting via the user input window an approval or a disapproval of the printing of the identification sheet, receiving the approval or the disapproval via the user input window, and printing the identification sheet only in case of a received approval.

According to the example, the method comprises the step of locking opening-closing means for opening the image reproduction apparatus for removal of the at least one consumable until the identification sheet is printed. The locking may take place after a received approval. The locking may be initially applied until the identification sheet has been printed. This is advantageous to avoid situations wherein the consumable is removed from the image reproduction apparatus and the image reproduction apparatus is not able to print the identification sheet any more due to the removed consumable.

The example also relates to an image reproduction apparatus for printing a digital image, the image reproduction apparatus comprising a print unit, a user interface unit and a control unit for controlling the print unit and the user interface unit, said control unit comprising detection means for detecting a trigger of removal of at least one consumable from the image reproduction apparatus, retrieving means for retrieving characteristics of the at least one consumable upon detection of the trigger, wherein the print unit is configured to print an identification sheet comprising the retrieved characteristics. The identification sheet may be put near or on top of the at least one consumable after removal of the at least one consumable from the image reproduction apparatus.

According to an embodiment of the image reproduction apparatus mentioned here-above the control unit comprises requesting means for requesting via a user input window at the user interface unit an approval or disapproval of the printing of the identification sheet upon detection of the trigger and a receiving means for receiving an approval or a disapproval via the user interface window, wherein the control unit is configured to print the identification sheet only in case of a receipt of an approval by the receiving means.

The invention also relates to a computer program product that, when executed on a processor, performs a method according to the invention.

The invention also relates to a recording medium comprising the computer program product according to the invention.

The method and the image reproduction apparatus will be explained in greater detail with reference to the accompanying drawings wherein:
Fig. 1A shows a schematic drawing of a configuration of an image reproduction apparatus according to the invention,
Fig. 1B shows a control unit of the image reproduction apparatus according to Fig. 1A,
Fig. 2 - 3 show flow diagrams of embodiments of the method according to the invention with respect to the removal of at least one sheet from a holder,
Fig. 4 shows an example of a identification sheet according to the invention, and
Fig. 5 - 6 show flow diagrams of embodiments of the method according to the invention with respect to the removal of at least one consumable from the image reproduction apparatus.

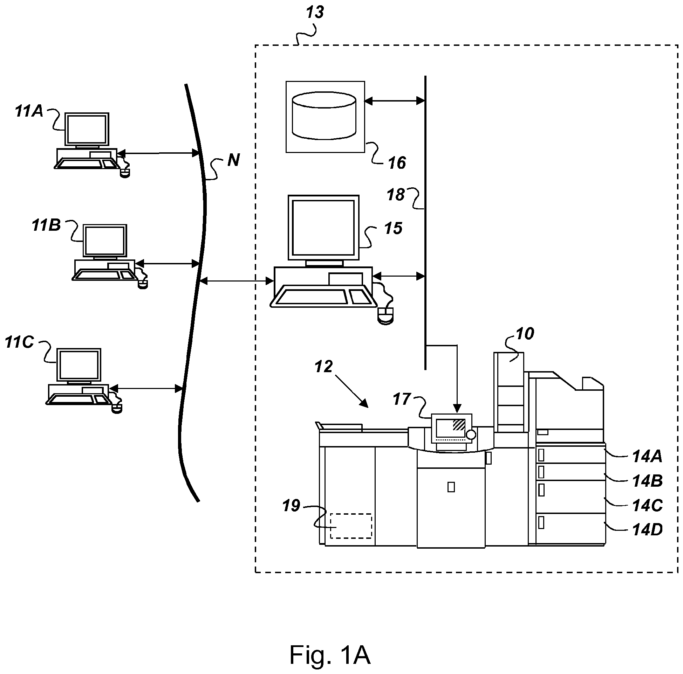

Fig. 1A shows a general reproduction system including user workstations 11A - 11C (e.g., PCs) and a printing facility 13, all connected by a network N such as a Local Area Network, or even the internet. The printing facility includes an image reproduction apparatus 12 and a work station 15, which may include a server operating system or a normal operating system for a PC. The printing facility may also include a document database 16 or be connected to a central database facility acting as a document database. The devices in the printing facility are interconnected by a local network 18, which may be part of the general network N.

In operation, users prepare documents on their workstations and submit the resulting document data files to the centralized printing facility for printing and possibly storage in the database 16. The files for printing are received by the server 15 and are, under the control of a user or operator, transferred to the image reproduction apparatus 12. The server 15 runs program software and so forms a system for editing and specifying the print processing of the print job that produces the prints according to the document file submitted by the users. Job history data may be stored at the server 15 or at the control unit 19 of the image reproduction apparatus 12.

The image reproduction apparatus 12 has a local user interface 17 mounted on top of the image reproduction apparatus 12. The local user interface may also be integrated in a front panel of the image reproduction apparatus. The local user interface 17 may be a touch screen. The image reproduction apparatus 12 comprises a control unit 19 for controlling to receiving, scheduling and processing of print jobs and the processing of copy jobs. The image reproduction apparatus 12 comprises a print device for printing a print job on a receiving material like sheets. The image reproduction apparatus 12 comprises a scan device for scanning a hardcopy original in case of a copy job. The image reproduction apparatus 12 comprises output holders 10 for delivering the print jobs. The image reproduction apparatus 12 may also comprises at least one finishing module (not shown) for post-processing the delivered print jobs, like binding, gluing, folding etc. The image reproduction apparatus 12 also comprises at least one input holder 14A - 14D for holding media on which documents are to be printed or copied. Each input holder 14A - 14D comprises opening-closing means, for example a door. The input holder 14A - 14D can be opened via the opening-closing means to put in a pile of sheets or to remove a pile of sheets which is already present in the input holder. After a pile of sheets is put in, the input holder can be closed again by the opening-closing means.

When a print job arrives at the image reproduction apparatus 12 and the job is ready to be printed, settings of the print job are displayed on the local user interface 17. The elucidation hereinafter assumes the settings of the print job to be displayed at the local user interface 17 of the image reproduction apparatus 12. However, embodiments showing the settings of a print job on a work station arranged in the network N, e.g. on a window of a suitable printer driver, are not excluded from the scope of the invention.

The image reproduction apparatus according to the invention may be electro-photographical printer, an inkjet printer, or any other kind of image reproduction apparatus. An embodiment of the image reproduction apparatus uses sheets of receiving material. Receiving material may be paper, textile, metal plates, printed circuit plates, solar cell plates, overhead sheet material, plastic or any other kind of suitable receiving material or substrate. The image reproduction apparatus may comprise finishing options. However, finishing options of external finishing equipment may be coupled to the production system to finish a printed or copied job and to deliver the printed or copied job according to the wishes of a sender or a user of the print or copy job respectively.

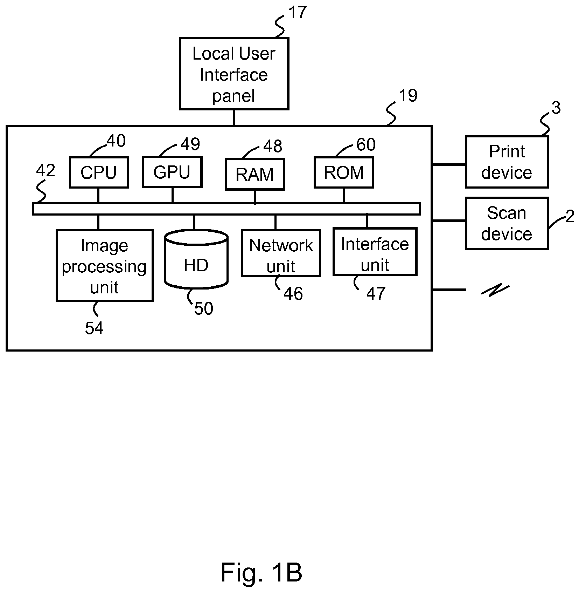

Fig. 1B shows an embodiment of the control unit 19 in more detail. The control unit 19 comprises a Central Processing Unit (CPU) 40, a Graphical Processor Unit (GPU) 49, a Random Access Memory (RAM) 48, a Read Only Memory (ROM) 60, a network unit 46, an interface unit 47, a hard disk (HD) 50 and an image processing unit 54 such as a Raster Image Processor (RIP). The aforementioned units 40, 49, 48, 60, 46, 47, 50, 54 are interconnected through a bus system 42. However, the control unit 19 may also be a distributed control unit.

The CPU 40 controls the print device 2 and the scan device 3 of the image reproduction apparatus in accordance with control programs stored in the ROM 60 or on the HD 50 and the local user interface panel 17. The CPU 40 also controls the image processing unit 54 and the GPU 49.

The ROM 60 stores programs and data such as boot program, set-up program, various set-up data or the like, which are to be read out and executed by the CPU 40.

The hard disk 50 is an example of a non-volatile storage unit for storing and saving programs and data which make the CPU 40 execute a print process to be characterized later. Characteristics of media, for example a digital media catalogue, may be stored on the hard disk 50 or in the ROM 60. The hard disk 50 also comprises an area for saving the data of externally submitted print jobs. The programs and data on the HD 50 are read out from the RAM 48 by the CPU 40 as needed. The RAM 48 has an area for temporarily storing the programs and data read out from the ROM 60 and HD 50 by the CPU 40, and a work area which is used by the CPU 40 to execute various processes. The interface card 47 connects the control unit 19 to the scan device 2 and the print device 3. The characteristics of the media in the holders 14A - 14D may be stored on the hard disk 50 or in the ROM 60.

The network card 46 connects the control unit 19 to the network N and is designed to provide communication with the workstations 11A - 11C (See Fig. 1A), and with other devices reachable via the network.

The image processing unit 54 may be implemented as a software component running on an operation system of the control unit 19 or as a firmware program, for example embodied in a field-programmable gate array (FPGA) or an application-specific integrated circuit (ASIC). The image processing unit 54 has functions for reading, interpreting and rasterizing the print job data. Said print job data contains image data to be printed (i.e. fonts and graphics that characterize the content of the document to be printed, characterized in a Page Description Language or the like), image processing attributes and print settings.

Basic modes of operation for the reproduction system are scanning, copying and printing.

The digital image obtained by the scan device 2 may be stored on a memory of the control unit 19 and be handled according to a copy path, wherein the image is printed by the print device 3. Alternatively, the digital image may be transferred from the control unit 19 to a client computer 11A - 11C (scan-to-file path). A user of the client computer 11A - 11C may decide to print a digital image, which reflects the printing mode of operation of the system.

An operable element (not shown) for printing the identification sheet on request, like a button, may be displayed on the local user interface 17 as a digital button, icon, thumb nail etc., or as an analogue button near a screen of the local user interface 17. The operable element may be part of at least one of the holders 14A - 14D. If a holder 14A - 14D has a user interface screen of its own, the operable element may be part of the user interface screen of the holder 14A - 14D.

The operable element may be integrated in the opening-closing means of the holders 14A - 14D. Moreover, the opening-closing means may also act as the operable element and generate a trigger of removal of media from the respective holder 14A - 14D to the control unit 19.

The operable element may be part of the output holders 10 of the image reproduction apparatus 12 as shown in Fig. 1A.

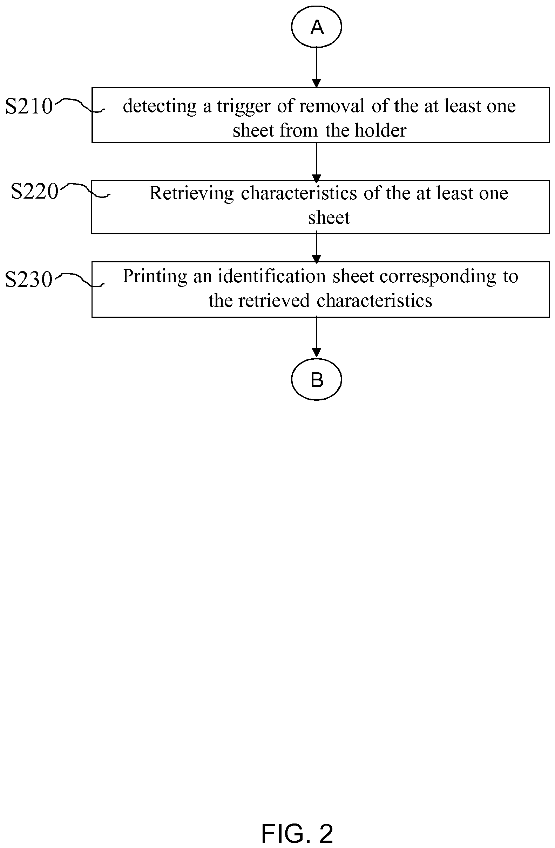

Fig. 2 shows a flow diagram of an embodiment of the method according to the invention. Starting point A leads to a first step S210 of detecting a trigger of removal of at least one sheet from the holder. Such a trigger may be initiated by opening of the opening-closing means of the holder, a request of the user to print an identification sheet, a difference in weight sensed in the holder by appropriate weight sensors. The trigger may also be a signal from the user interface of the image reproduction apparatus.

According to a second step S220 the characteristics of the at least one sheet in the holder are retrieved. The characteristics of the at least one sheet may comprises the amount of the at least one sheet, the kind of media of the at least one sheet, stock data or metadata regarding the last job printed from the holder. The media characteristics of the media of the at least one sheet in the holder, stock data and metadata regarding the last job printed form the holder may be retrieved from a hard disk in the image reproduction apparatus or from a server connected to the image reproduction apparatus. The amount of sheets that has to be unloaded may be retrieved by means of a weight sensor in the holder or a visual sensor in the holder. The amount of sheets may also be calculated based the original amount of sheets and on usage of the sheets during print jobs. The identification sheet may comprise characteristics of media removed from more than one holder. For example, there may be more than one holder for containing the same media which have to be emptied for a next print job. The identification sheet may also contain a schematic diagram of the image reproduction apparatus in order to guide the operator as to which holders need emptying.

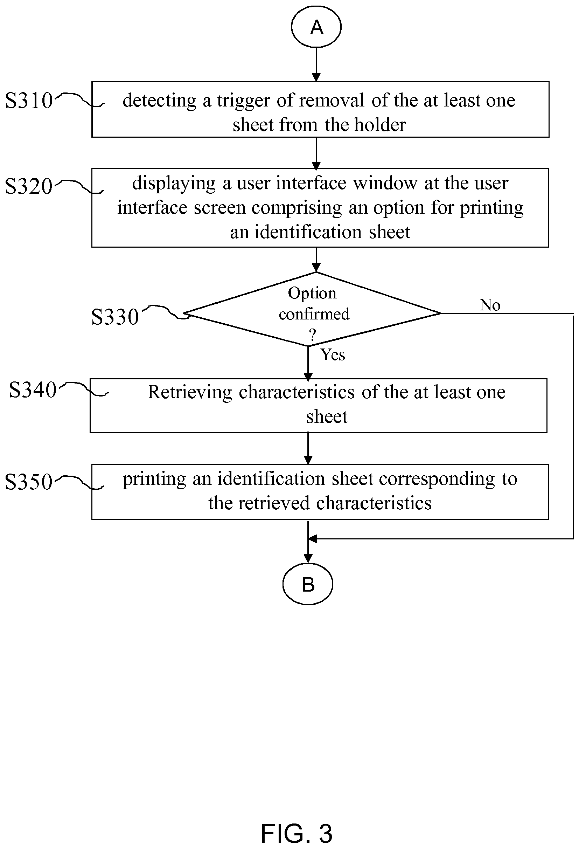

According to a third step S230 an identification sheet is printed corresponding to the retrieved characteristics. The printing of the identification sheet may be automatically when the trigger of removal is detected or when the removal itself is detected, for example by the opening-closing means of the holder or a weight sensor or visual sensor in the holder. The printing of the identification sheet may also be on request via the user interface of the image reproduction apparatus which will be elucidated in Fig. 3.

The at least one sheet may be removed before or after the printing of the identification sheet. When the at least one sheet is removed before the printing of the identification sheet, the identification sheet may be printed on media from another holder, if there is more than one holder. In case of one holder, the printing of the identification sheet must wait until the only holder is loaded again. The identification sheet may be printed to another output holder than a default output holder in case there is a plurality of output holders. This is advantageous since the identification sheet is separated from the prints of the print jobs which have been processed or from the prints that are processed at the very moment.

The method ends in end point B and the user or operator is able to collect the identification sheet from the appropriate output holder and to put the identification sheet near or on top of the at least one sheet which has been removed from the holder and has been put on an appropriate location like a table.

Fig. 3 shows a flow diagram of a further embodiment of the method according to the invention. Starting point A leads to a first step S310 of detecting a trigger of removal of the at least one sheet from the holder as already elucidated with respect to Fig. 2.

According to a second step S320 a user interface window is displayed at the user interface panel of the image reproduction apparatus. The user interface window comprises an option for printing an identification sheet. The user can select a printing of the identification sheet or not.

In a third step S330 the user input is analyzed for the specific option. If the option is confirmed, the method proceeds with a fourth step S340, otherwise the method proceeds to and ends in end point B. In a further embodiment the option query of the third step S330 is accompanied by a request to the user or operator to indicate the holder from which media is to be used to print the identification sheet. This is in particular advantageous if there is a plurality of input holders. The media in some input holders may be more suitable for printing the identification sheet, for example more robust, cheaper or more distinguishable, for example white standard paper, than media in the other input holders.

In the fourth step S340 characteristics of the at least one sheet in the holder are retrieved as already elucidated with respect to Fig. 2.

In a fifth step S350 an identification sheet is printed corresponding to the retrieved characteristics as already elucidated with respect to Fig. 2. After the fifth step S350 the method ends in end point B.

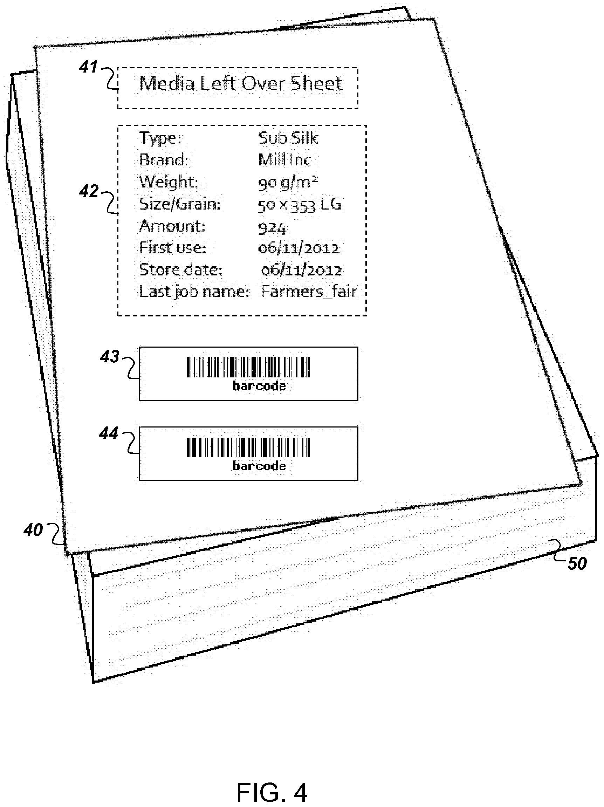

Fig. 4 shows an example of an identification sheet 40 printed according to the invention. The identification sheet 40 comprises a title block named "Media Left Over Sheet", a characteristics block 42 comprising the retrieved characteristics of the pile of sheets 50 removed from the holder, a first barcode 43 for stock management and a second barcode 44 for assigning or adding the right media when loading it again. After the printing of the identification sheet, the user or operator of the image reproduction apparatus fetches the identification sheet from an output holder of the image reproduction apparatus and puts it on top of the removed pile of sheets 50.

In case that the media is of high value or expensive the identification sheet may be used as proof as to how many sheets or media should remain as proof to the client. The identification sheet may also be used in the aftermath how many sheets were wasted, both in actual values and in percentages, or in efficiency of the productivity. The identification sheet need not to be printed on the same media as the media that is being removed, so unloading could start immediately while the machine uses a different holder to print the identification sheet.

As the identification sheet is printed for future use of the media, the media information should be printed on it, maybe together with any safety warnings, expiration date, how to stock it, or any other relevant information for a management information system, which is in particular relevant for spot color ink that remains in the image reproduction apparatus.

The method according to the invention can also be used in order to identify a consumable that has been taken out of a machine, has been stored for a while and then are being used again because of their residual value or their residual life time. A consumable is defined as a replaceable or reusable part to be placed in or already situated in the image reproduction apparatus. A media sheet is not a consumable with respect to this definition. Such a consumable may be any supply part of the image reproduction apparatus, a replaceable part or a reusable part, as will be elucidated hereinafter. The method according to the invention can also be used to print a label or identification sheet for attachment to an organic photoconductor, a print head, or a transfer belt for identifying a residual life time. The method according to the invention can also be used to print a label or identification sheet for attachment to a liquid cartridge, a spot color ink cartridge or a toner cartridge for identifying an amount of liquid left, an amount of spot color ink left or an amount of toner left respectively.

According to another embodiment the method comprises the step of receiving user input regarding the at least one media usage counter of the image reproduction apparatus. The usage counter may relate to a number of prints, copies and/or scans made when the appropriate consumable is present inside the image reproduction apparatus. Sometimes the replacement of a consumable has as a consequence that a usage counter may automatically be reset. In the latter case information regarding the lifetime of the replaced consumable may be lost. In that particular case it is therefore appropriate to let the user enter or save this lifetime information by means of the user interface of the image reproduction apparatus before the removal of the consumable in question from the image reproduction apparatus.

When the image reproduction apparatus is returned from the customer to the manufacturer for remanufacturing by the manufacturer of the image reproduction apparatus and a technician wants a identification sheet on the current lifetime of all parts, the technician may on request print out an identification sheet as to know which parts have to be replaced or reused. Such an identification sheet may comprise characteristics of more than one part or consumable. The identification sheet may also comprise a schematic diagram of the image reproduction apparatus in order to guide the operator as to which opening-closing means of the image reproduction apparatus have to be opened in order to remove the respectively parts and/or consumables.

Typical lifetime data of a consumable are names of the jobs printed via the consumable, run time of jobs printed via the consumable, number of prints printed via the consumable, remaining life time of the consumable, the date at which the consumable has been placed into the image reproduction apparatus etc. The identification sheet can also be used to check that key performance indicators or service level agreements have been met or for specific activity based accounting information. Obviously this functionality can be triggered on the local user interface of the image reproduction apparatus, but also be part of an automated workflow, or embedded in a print job that this sheet is a requirement of the print job.

In an embodiment the image reproduction system prevents removing a consumable until the correct authorization is given. In another embodiment the image reproduction system prevents removing a consumable until at least two people are signed in and present for extra security.

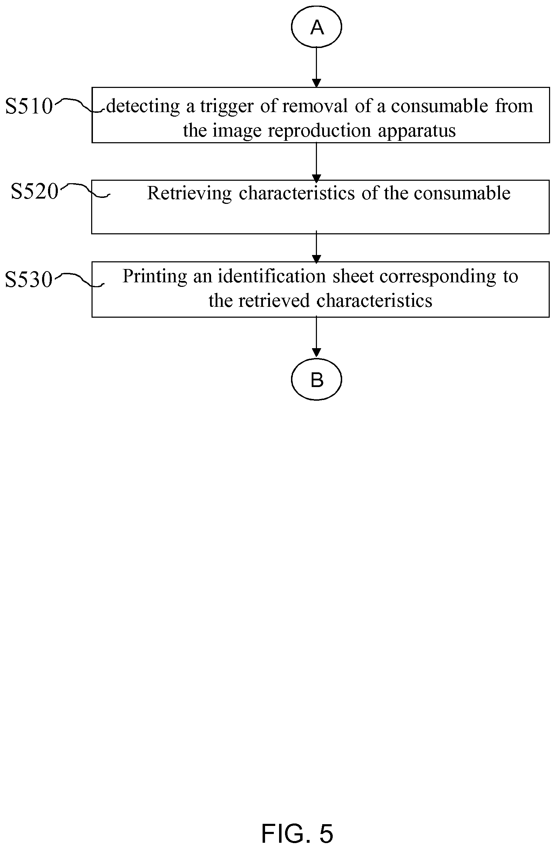

Fig. 5 shows a flow diagram of an embodiment of the method according to the invention. Starting point A leads to a first step S510 of detecting a trigger of removal of a consumable from the image reproduction apparatus. Such a trigger may be an opening of an opening-closing means of the image reproduction apparatus, a request of the user to print an identification sheet for the respective consumable, a difference in weight sensed in the image reproduction apparatus by appropriate weight sensors, etc.

According to a second step S520 the characteristics of the consumable are retrieved. The characteristics of the consumable may comprise the lifetime of the consumable, at least one usage counter, or stock data. The characteristics of the consumable and the stock data may be retrieved from a hard disk in the image reproduction apparatus or from a server connected to the image reproduction apparatus. In case of a print head the amount of the marking material, like ink and toner, left over may be retrieved by means of a weight sensor or a visual sensor in the print head or in the cartridge containing the marking material.

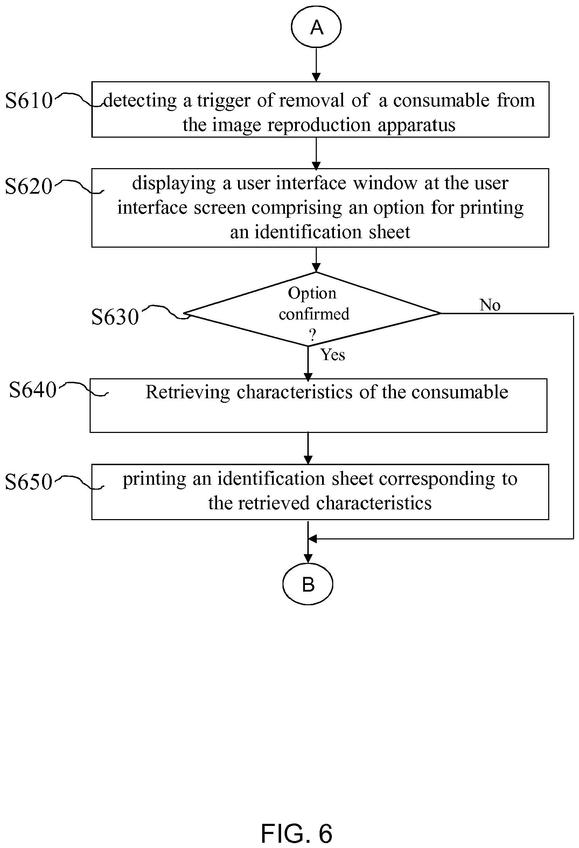

According to a third step S530 an identification sheet is printed corresponding to the retrieved characteristics. The printing of the identification sheet may be automatically when the trigger of removal is detected or when the removal itself is detected, for example by opening-closing means of the image reproduction apparatus which are used to remove the consumable or a weight sensor or visual sensor in the image reproduction apparatus at the location of the consumable in the image reproduction apparatus. The printing of the identification sheet may also be on request which will be elucidated in Fig. 6.

The consumable may be removed before or after the printing of the identification sheet. When the consumable is removed before the printing of the identification sheet, the identification sheet may be printed on media from a holder only then when the consumable is replaced, i.e. a new consumable has been put into the image reproduction apparatus so that the image reproduction apparatus is ready for printing again. When the consumable is removed after the printing of the identification sheet, the identification sheet may be printed on media from any input holder. The identification sheet may be printed to another output holder than a standard output holder. This is advantageous since the identification sheet is separated from the prints of the print jobs which have been processed or from the prints that are processed at the very moment.

The method ends in end point B and the user or operator is able to collect the identification sheet from the appropriate output holder and to fix the identification sheet to the removed consumable or to place it near the removed consumable. The consumable and the identification sheet together are put on an appropriate location like a table or other stock location.

Fig. 6 shows a flow diagram of a further embodiment of the method according to the invention. Starting point A leads to a first step S610 of detecting a trigger of removal of a consumable from the image reproduction apparatus as already elucidated with respect to Fig. 5.

According to a second step S620 a user interface window is displayed at the user interface panel of the image reproduction apparatus. The user interface window comprises an option for printing an identification sheet. The user can select a printing of the identification sheet or not.

In a third step S630 the user input is analyzed for the specific option. If the option is confirmed, the method proceeds with a fourth step S640, otherwise the method proceeds to and ends in end point B.

In the fourth step S640 characteristics of the consumable to be removed are retrieved as already elucidated with respect to Fig. 5.

In a fifth step S650 an identification sheet is printed corresponding to the retrieved characteristics as already elucidated with respect to Fig. 5. After the fifth step S650 the method ends in end point B.

## Claims

1. Method for assigning an identification to at least one sheet to be removed from an input holder (14A, 14B, 14C, 14D) of an image reproduction apparatus (12),
the input holder configured for holding sheets of a receiving medium, the method comprising the step of
detecting a trigger of removal of the at least one sheet (50) from the input holder, **characterized in that** the method comprises the steps of,
upon detection of the trigger,
retrieving characteristics (42) of the at least one sheet and
printing an identification sheet (40) comprising the retrieved characteristics.

2. Method according to claim 1, wherein the characteristics of the at least one sheet comprises at least one of the amount of the at least one sheet, the kind of media of the at least one sheet, name of the operator in charge of removal, stock data, and metadata of the last job printed on media from the input holder.

3. Method according to claim 1, wherein the method comprises the further steps of displaying a user input window at a user interface screen (17) of the reproduction apparatus upon detection of the trigger of the removal,
requesting via the user input window an approval or a disapproval of the printing of the identification sheet,
receiving the approval or the disapproval via the user input window, and
printing the identification sheet only in case of a received approval.

4. Method according to claim 1, wherein the method comprises the step of locking the input holder from removing the at least one sheet until the identification sheet is printed.

5. Method according to claim 1, wherein the identification sheet is printed from the input holder at which a trigger of removal of the least one sheet is detected.

6. Method according to claim 1, wherein the identification sheet is printed from another input holder than the input holder at which a trigger of removal of the least one sheet is detected.

7. Method according to claim 1, wherein the identification sheet is printed to a same output holder (10) as to which the image reproduction apparatus is currently printing a print job or to which the image reproduction apparatus has printed his last print job.

8. Method according to claim 1, wherein the identification sheet is printed to another output holder than an output holder to which the image reproduction apparatus is currently printing a print job or to which the image reproduction apparatus has printed his last print job.

9. Method according to claim 1, wherein the identification sheet is printed as a duplex sheet.

10. Image reproduction apparatus (12) for printing a digital image on a receiving medium , the image reproduction apparatus (12) comprising a print unit, an input holder (14A, 14B, 14C, 14D) for holding sheets of the receiving medium, a user interface unit (17) and a control unit (19) for controlling the print unit and the user interface unit, said control unit comprising detection means for detecting a trigger of removal of at least one sheet from the input holder,**characterized in that** the control unit comprises retrieving means for retrieving characteristics (42, 43, 44) of the at least one sheet upon detection of the trigger, and the print unit is configured to print an identification sheet (40) comprising the retrieved characteristics.

11. Image reproduction apparatus according to claim 10, wherein the control unit comprises requesting means for requesting via a user input window at the user interface unit an approval or disapproval of the printing of the identification sheet upon detection of the trigger and a receiving means for receiving an approval or a disapproval via the user interface window, wherein the control unit is configured to print the identification sheet only in case of a receipt of an approval by the receiving means.

12. Computer program product that, when executed on a processor, causes the device of claim 10 to perform the method according to claim 1.

13. Recording medium comprising the computer program product according to claim 12.

## Patentansprüche

1. Verfahren zum Zuweisen einer Identifizierung zu wenigstens einem Bogen, der aus einem Eingabehalter (14A, 14B, 14C, 14D) eines Bildreproduktionsgerätes (12) zu entfernen ist, welcher Eingabehalter dazu konfiguriert ist, Bögen eines Empfangsmediums aufzunehmen, welches Verfahren die folgenden Schritte aufweist:
Detektieren eines Auslösers für das Entfernen des wenigstens einen Bogens (50) aus dem Eingabehalter,
**dadurch gekennzeichnet, dass** das Verfahren die folgenden Schritte aufweist:
bei Detektion des Auslösers,
Abrufen von Charakteristika (42) des wenigstens einen Bogens, und
Drucken eines Identifizierungsbogens (40), der die abgerufenen Charakteristika enthält.

2. Verfahren nach Anspruch 1, bei dem die Charakteristika des wenigstens einen Bogens ein oder mehrere der folgenden Daten umfassen: Menge des wenigstens einen Bogens, Medientyp des wenigstens einen Bogens, Name des Bedieners, der für das Entfernen verantwortlich ist, Lagerdaten und Metadaten zu dem letzten Druckauftrag, der auf Medien aus dem Eingabehalter gedruckt wurde.

3. Verfahren nach Anspruch 1, bei dem das Verfahren die folgenden weiteren Schritte aufweist:
Anzeigen eines Benutzereingabefensters an einem Bildschirm (17) einer Benutzerschnittstelle des Reproduktionsgerätes bei Detektion des Auslösers für das Entfernen,
Anfordern, über das Benutzereingabefenster, einer Zustimmung oder einer Ablehnung für das Drucken des Identifizierungsbogens,
Empfang der Zustimmung oder Ablehnung über das Benutzereingabefenster, und
Drucken des Identifizierungsbogens nur in dem Fall, dass eine Zustimmung empfangen wurde.

4. Verfahren nach Anspruch 1, bei dem das Verfahren den Schritt des Sperrens des Eingabehalters gegen das Entfernen des wenigstens einen Bogens einschließt, bis der Identifizierungsbogen gedruckt worden ist.

5. Verfahren nach Anspruch 1, bei dem der Identifizierungsbogen aus dem Eingabehalter gedruckt wird, bei dem ein Auslöser für das Entfernen des wenigstens einen Bogens detektiert wurde.

6. Verfahren nach Anspruch 1, bei dem der Identifizierungsbogen aus einem anderen Eingabehalter gedruckt wird als dem Eingabehalter, an dem ein Auslöser für das Entfernen des wenigstens einen Bogens detektiert wurde.

7. Verfahren nach Anspruch 1, bei dem der Identifizierungsbogen in einen gleichen Ausgabehalter (10) gedruckt wird, in den das Bildreproduktionsgerät aktuell einen Druckauftrag druckt oder in den das Bildreproduktionsgerät seinen letzten Druckauftrag gedruckt hat.

8. Verfahren nach Anspruch 1, bei dem der Identifizierungsbogen in einen anderen Ausgabehalter gedruckt wird als den Ausgabehalter, in den das Bildreproduktionsgerät aktuell einen Druckauftrage druckt oder in den das Bildreproduktionsgerät seinen letzten Druckauftrag gedruckt hat.

9. Verfahren nach Anspruch 1, bei dem der Identifizierungsbogen als ein Duplexbogen bedruckt wird.

10. Bildreproduktionsgerät (12) zum Drucken eines digitalen Bildes auf ein Empfangsmedium, welches Bildreproduktionsgerät (12) eine Druckeinheit, einen Eingabehalter (14A, 14B, 14C, 14D) zur Aufnahme von Bögen des Empfangsmediums, eine Benutzerschnittstelleneinheit (17) und eine Steuereinheit (19) zur Steuerung der Druckeinheit und der Benutzerschnittstelleneinheit aufweist, wobei die Steuereinheit Detektionsmittel aufweist zur Detektion eines Auslösers für das Entfernen wenigstens eines Bogens aus dem Eingabehalter, **dadurch gekennzeichnet, dass** die Steuereinheit Abrufmittel aufweist zum Abrufen von Charakteristika (42, 43, 44) des wenigstens einen Bogens bei Detektion des Auslösers, und die Steuereinheit dazu konfiguriert ist, einen Identifizierungsbogen (40) zu drucken, der die abgerufenen Charakteristika enthält.

11. Bildreproduktionsgerät nach Anspruch 10, bei dem die Steuereinheit Anforderungsmittel aufweist zum Anfordern, über ein Benutzereingabefenster an der Benutzerschnittstelleneinheit, einer Zustimmung oder Ablehnung des Druckens des Identifizierungsbogens bei Detektion des Auslösers, sowie eine Empfangseinrichtung zum Empfang einer Zustimmung oder Ablehnung über das Benutzereingabefenster, wobei die Steuereinheit dazu konfiguriert ist, den Identifizierungsbogen nur im Fall eines Empfangs einer Zustimmung durch die Empfangseinrichtung zu drucken.

12. Computerprogrammprodukt, das, wenn es auf einem Prozessor ausgeführt wird, die Vorrichtung nach Anspruch 10 veranlasst, das Verfahren nach Anspruch 1 auszuführen.

13. Speichermedium mit dem Computerprogrammprodukt nach Anspruch 12.

## Revendications

1. Procédé d'assignation d'une identification à au moins une feuille à retirer d'un bac d'entrée (14A, 14B, 14C, 14D) d'un appareil de reproduction d'image (12), le bac d'entrée étant configuré pour contenir des feuilles d'un support de réception, le procédé comprenant l'étape de :
la détection d'un déclenchement du retrait de l'au moins une feuille (50) du bac d'entrée,
**caractérisé en ce que** le procédé comprend les étapes de :
à la détection du déclenchement,
la récupération de caractéristiques (42) de l'au moins une feuille, et
l'impression d'une feuille d'identification (40) comprenant les caractéristiques récupérées.

2. Procédé selon la revendication 1, dans lequel les caractéristiques de l'au moins une feuille comprennent au moins l'un de la quantité de l'au moins une feuille, le type de support de l'au moins une feuille, un nom de l'opérateur chargé du retrait, des données de stock, et des métadonnées du dernier travail imprimé sur le support depuis le bac d'entrée.

3. Procédé selon la revendication 1, dans lequel le procédé comprend en outre les étapes de :
l'affichage d'une fenêtre d'entrée d'utilisateur à un écran d'interface utilisateur (17) de l'appareil de reproduction à la détection du déclenchement du retrait,
la demande, par l'intermédiaire de la fenêtre d'entrée d'utilisateur, d'un accord ou d'un refus de l'impression de la feuille d'identification,
la réception de l'accord ou du refus par l'intermédiaire de la fenêtre d'entrée d'utilisateur, et
l'impression de la feuille d'identification uniquement dans le cas d'un accord reçu.

4. Procédé selon la revendication 1, dans lequel le procédé comprend l'étape du verrouillage du bac d'entrée pour interdire le retrait de l'au moins une feuille jusqu'à ce que la feuille d'identification soit imprimée.

5. Procédé selon la revendication 1, dans lequel la feuille d'identification est imprimée depuis le bac d'entrée auquel un déclenchement du retrait de l'au moins une feuille est détecté.

6. Procédé selon la revendication 1, dans lequel la feuille d'identification est imprimée depuis un bac d'entrée autre que le bac d'entrée auquel un déclenchement du retrait de l'au moins une feuille est détecté.

7. Procédé selon la revendication 1, dans lequel la feuille d'identification est imprimée sur un bac de sortie (10) identique à celui sur lequel l'appareil de reproduction d'image imprime actuellement un travail d'impression ou sur lequel l'appareil de reproduction d'image a imprimé son dernier travail d'impression.

8. Procédé selon la revendication 1, dans lequel la feuille d'identification est imprimée sur un bac de sortie autre qu'un bac de sortie sur lequel l'appareil de reproduction d'image imprime actuellement un travail d'impression ou sur lequel l'appareil de reproduction d'image a imprimé son dernier travail d'impression.

9. Procédé selon la revendication 1, dans lequel la feuille d'identification est imprimée en tant qu'une feuille recto-verso.

10. Appareil de reproduction d'image (12) permettant l'impression d'une image numérique sur un support de réception, l'appareil de reproduction d'image (12) comprenant une unité d'impression, un bac d'entrée (14A, 14B, 14C, 14D) pour contenir des feuilles du support de réception, une unité d'interface utilisateur (17) et une unité de commande (19) pour commander l'unité d'impression et l'unité d'interface utilisateur, ladite unité de commande comprenant un moyen de détection pour la détection d'un déclenchement du retrait d'au moins une feuille du bac d'entrée, **caractérisé en ce que** l'unité de commande comprend un moyen de récupération pour la récupération de caractéristiques (42, 43, 44) de l'au moins une feuille à la détection du déclenchement, et l'unité d'impression est configurée pour l'impression d'une feuille d'identification (40) comprenant les caractéristiques récupérées.

11. Appareil de reproduction d'image selon la revendication 10, dans lequel l'unité de commande comprend un moyen de demande pour la demande, par l'intermédiaire d'une fenêtre d'entrée d'utilisateur à l'unité d'interface utilisateur, d'un accord ou d'un refus de l'impression de la feuille d'identification à la détection du déclenchement, et un moyen de réception pour la réception d'un accord ou d'un refus par l'intermédiaire de la fenêtre d'entrée d'utilisateur, dans lequel l'unité de commande est configurée pour l'impression de la feuille d'identification uniquement dans le cas d'une réception d'un accord par le moyen de réception.

12. Produit de programme informatique qui, lorsqu'il est exécuté sur un processeur, amène le dispositif selon la revendication 10 à effectuer le procédé selon la revendication 1.

13. Support d'enregistrement comprenant le produit de programme informatique selon la revendication 12.
